# EUROPEAN PATENT APPLICATION

(11) **EP 0 799 641 A2**
(43) Date of publication of application: **08.10.1997**
(21) Application number: 97660037.9
(22) Date of filing: 02.04.1997
(51) Int. Cl.: B01J 20/32

(54) **Functional surfaces for chemical reactions and process for the preparation thereof**

(30) Priority: 03.04.1996 FI 961512
(71) Applicant: Mikrokemia Oy, 02150 Espoo (FI)
(72) Inventor: Iiskola, Eero, 02120 Espoo (FI); Suntola, Tuomo, 02630 Espoo (FI)
(74) Representative: Sundman, Christoffer

(57) **Abstract**

The invention concerns a solid phase surface structure and a process for preparing such a structure. The surface structure comprises functional groups on the surface of a substrate. The species of a reactant fed in gas or liquid phase is bound at least temporarily to said groups due to the interaction between said species and said functional group during a chemical reaction. According to the invention essentially all of the functional groups are attached to the substrate via a bridging group bound to the surface atoms of the substrate, the surface binding sites being so far from the surface of the substrate that the surface of the substrate does not have any significant influence on the interaction between the surface binding sites and the reactant species. The functionalized surface structures can be provided by reacting an inorganic oxide support with a compound or formula (I)

R¹AX¹ (I)

wherein A is silicon, tin, germanium or carbon, R¹ is a hydrocarbon group and X¹ is a functional group. The reaction between the support and the compound of formula I is carried out under surface bond selective conditions and the reaction is continued until essentially all of the hydroxyl groups of the inorganic surface have reacted under surface bond selective conditions. By means of the invention functionalized surfaces are provided which can be used for chromatographic applications and as catalyst supports.

## Description

The present invention concerns a functionalized surface structure according to the preamble of claim 1 for carrying out chemical reactions during which the species of a reactant fed in liquid or gas phase is bound to the functional groups of the surface structure due to interaction between the groups and the species.

The invention also concerns a process according to the preamble of claim 11 for preparing functionalized surface structures.

In the context of the present invention, the term "functionalized surface structure" is used to refer to a solid substrate with functional groups bound thereto, the functional groups being capable of reacting with the species of the reactant fed in liquid or gas phase, that is, with molecules, ions, or chemical compounds. Functional surfaces are used in, e.g., chromatography and adsorption mass applications whereby desired chemical species, such as metals or solvent molecules, are at least temporarily bound to the functional groups of the surface structure from the sample examined.

The above definition of functionalized surface structures also covers supports of heterogeneous catalysts which typically comprise an inorganic oxide whereby a catalytically active metal or metal compound may be bound to the surface functional groups, e.g., hydroxyl groups, of the inorganic oxide, in order to obtain a catalyst. An important advantage provided by the thus prepared heterogeneous catalysts over homogeneous catalysts, i.e., catalysts soluble in the reaction medium, consists in easy processability (purification, activation, etc.) of the catalyst. However, a disadvantage may be considered to lie therein that the support material often affects the catalyzed reaction; the catalytic properties of the transition metal and the carrier are many times even impossible to tell apart. Thus, the homo- and copolymerization of, e.g., ethylene and other 1-olefins with heterogeneous Ziegler-Natta catalysts will, due to the effect of the support, provide polyolefins with a broad molecular weight distribution (> 4 to 5), whereas homogeneous catalysts will provide a narrow molecular weight distribution.

Problems may also arise in the case of other functional surfaces when both original surface groups and new functional groups bound to the surface are present in the surface structure. In addition to the fact that the groups will be in competition with each other for the binding of chemical species, impurities such as water molecules bound to the original surface groups may impair and interfere with the operation of the functionalized surface in, e.g., adsorption mass applications. The sensitivity of chromatographic separation/assay is reduced if the chromatosubstrate comprises groups with different affinities. These will easily produce the so called tailing effect.

The purpose of the present invention is to eliminate the drawbacks hampering the prior art and to accomplish a functionalized surface structure characterized by easy processability and handling of conventional solid-phase surfaces, whereby, however, the functional properties of the structure are determined exclusively or at least mainly on the basis of functional groups separately bonded to the surface. The invention also aims at providing a process for the preparation of such surface structures.

The invention is based on the concept of heterogenization of the functional groups, i.e., they are attached from gas phase onto a solid support by using bridging groups which can be bound to the surface of the support with covalent bonds or other stable bonds and which are of a size rendering the functional influence of the functional groups independent of the support surface.

The bridging compound used for the afore-described heterogenization preferably contains two functional groups, one at each end thereof, whereby one of the functional groups forms a bond (e.g. a covalent bond) with the surface binding sites of the inorganic surface (e.g. the hydroxyl groups or tensioned metal-oxygen-metal bridges of the surface) and the other one is left free after the reaction for desired additional reactions.

In particular the compounds of the presented type are bound to all or essentially all available surface binding sites, mostly the hydroxyl groups, under surface bond selective conditions.

More specifically, the solution according to the invention is mainly characterized by what is stated in the characterizing part of claim 1.

The process according to the invention is, again, characterized by what is stated in the characterizing part of claim 11.

The present invention will now be examined more closely with the help of a detailed description and a number of working examples.

The invention concerns synthetization of functional surfaces on inorganic surfaces, such as silicon oxide, aluminium oxide, titanium oxide, and other similar supports, to provide "a solid-phase surface structure", in other words a structure wherein the substrate comprises a solid substance. In its general form the invention comprises binding of functional groups to a substrate via a bridging group attached to the surface atoms of said substrate, whereby the functional groups are placed so far from the surface of the substrate that said surface does not have any significant influence on the interaction between the functional groups and the reactant species fed in liquid or gas phase.

Thus, a support or a similar solid surface is reacted under surface bond selective conditions with a compound of formula (I)

R¹AX¹ (I)

wherein R¹ is a hydrocarbon residue (cf. the definition of the group below), A is an atom capable of forming a bond with a surface atom or group of surface atoms on the surface of the support, and X¹ is a functional group. Preferably A is silicon, tin, germanium or carbon.

Due to the interaction with the inorganic support, the compound R¹AX¹ reacts with the hydroxyl groups or metal-oxygen-metal bridges of the surface, whereby R¹AX¹ is bound via the oxygen to the surface and X¹ forms a leaving group. The hydrocarbon chain R¹ forms a linker or bridge group to the outer end of which any desired functional group or structure can be attached once the bridging group has been bound to the surface of the substrate.

For producing the bridge group bound to the substrate a reactant is preferably used containing two functional groups, one of which forms a bond (e.g. a covalent bond) with the surface binding sites (e.g. the hydroxyl groups or tensioned silicon-oxygen-silicon bridges) of the inorganic surface, whereas the other one remains free after the reaction for desired further reactions during which it forms the new surface binding sites for the functional surfaces. Between these functional groups there is a bridge group which isolates the groups from each other. In practice, the distance between the surface bonding sites and the surface atoms of the substrate is at least 20 nm, typically more.

A compound of formula (II)

X²R¹AX¹ (II)

is preferably used, wherein X¹ and X² can be the same or different and they stand for a functional group or structure and R¹ and A have the same meaning as above.

The bridging group R¹ comprises in both cases typically a linear, branched or cyclic hydrocarbon group, which possibly contains at least one heteroatom. Thus, the bridging group can comprise an alkylene or arylene group which possibly contains one hetero atom, such as sulphur, oxygen or nitrogen. The group of formula -(CH₂)ₖ-, wherein k is an integer from 1 to 4, is an example of a bridging group.

Examples of the functional groups X¹ and X², respectively, (X¹ is the group which reacts with the surface) of the above formulas (I) and (II) are listed in the following: alcohols (R-OH), ethers (R-O-R), halides (R-X), aldehydes (RCHO), ketones (R₂CO), carboxylic acids (R-CO₂H), carboxylic anhydrides (R-CO₂)₂O, dicarboxylic acids (HOOC-R-COOH), esters (R-COO₂R), amides (R-CONH₂), amines (R-NH₂), nitro compounds (R-NO₂), nitriles (RC=N) and thiols (R-SH). In the above formulas R stands for hydrocarbyl radicals, typically saturated or unsaturated, linear or branched hydrocarbon groups, such as C₁₋₁₀ alkyl or alkenyl or arylene groups.

In the formulas (I) and (II) the group -AX² preferably corresponds to the formula (III) -MR² ₘX³ ₍₃₋ₘ₎. In formula (III) M is a tetravalent metal or semimetal, such as silicon, tin or germanium, or carbon, and m is an integer 0, 1 or 2, X³ is a group which is hydrolyzable when the terminal group reacts with the surface binding sites and R² is hydrogen or a lower alkyl group. The terminal group anchors the bridge group to the surface of the substrate. Particularly preferred terminal groups are the silanes represented by the formula (IV)

-SiR² ₘX³ ₍₃₋ₘ₎ (IV)

wherein R² and X³ have the same meaning as above.

The chemical properties of tin and germanium are similar to those of silicon, and their compounds are also considered advantageous in the process according to the invention.

The bridge group contains at least one carbon-hetero atom bond, preferably there is at least a three-atom linear grouping, e.g., a carbon-carbon-hetero atom bond having a length of about 24 nm. Instead of the linear grouping the bridge group can contain a phenylene ring or other cyclic bivalent structure. Methylene, ethylene, propylene and butylene groups and phenylene and naphthylene and other corresponding heterocyclic radicals (e.g. quinazolinyl) are examples of particularly preferred bridge structures.

At the outer end of the bridging compound there is a group with at least one functional site, i.e. a site which is capable of reacting with some other group or structure. This group is either contained in the reactant as such (group X² in the formula X²RAX¹) or it can be attached to the bridging group once the latter has been bound to the surface. Functional sites are represented by the double and triple bonds of carbon and, e.g., the following functional groups: alcohols (R-OH), ethers (R-O-R), halides (R-X), aldehydes (RCHO), ketones (R₂CO), carboxylic acids (R-CO₂H), carboxylic anhydrides (R-CO₂)₂O, dicarboxylic acids (HOOC-R-COOH), esters (R-COO₂R), amides (R-CONH₂), amines (R-NH₂), nitro compounds (R-NO₂), nitriles (RC=N), and thiols (R-SH). In the above formulas R represents hydrocarbyl radicals and has the same meaning as above.

Of particular importance among the above-mentioned functional structures and groups are, for the purpose of the present application, diene-ring structures (e.g. the cyclopentadiene group, the indenyl group, the fluorene group etc.), wherein the conjugated diene structure is capable of reacting via a Diels-Alder reaction with compounds containing double bonds. Other important groups are the carboxylic acid, carboxylic anhydride, alcohol, ether and ester groups.

The substrate of the functional surfaces should be stable at those temperatures (typically > 200 °C) where the bridge compound is attached to its surface. In particular the substrate is an inorganic oxide selected from the group consisting of silicon dioxide (silica), aluminium oxide, silicon dioxide - aluminium oxide, synthetic and natural zeolites and aluminium silicates, magnesium oxide, magnesium silicate, titanium oxide and zirkonium oxide. The surface of these compounds typically already contains the afore-mentioned hydroxyl grups and metal-oxygen-metal-bridges which function as surface binding groups.

Based on the above, according to a particularly preferred embodiment of the invention an inorganic oxide containing the above-mentioned hydroxyl or bridge groups is reacted with a compound according to formula (V)

R¹AR² ₘX⁴ ₍₃₋ₘ₎ (V)

wherein
- A: is silicon, germanium, tin or carbon, which is capable of being bound to one, two or three surface oxygen atoms,
- R¹: is an non-hydrolyzable functional group or a reactive chemical structure which binds to A via a bridging group,
- R²: is an alkyl group,
- X⁴: is a hydrolyzing group which reacts with the hydroxy or metal-oxygen-metal-bridges of the inorganic oxide, and
- m: is an integer 0, 1, or 2,

When the compound of formula (V) reacts with the surface of the support it is bound to the surface typically via one or two oxygen groups, the group left on the surface of the support having the formula Va

-R¹AR² ₘX⁴ ₍₂₋ₘ₎- (Va)

or formula Vb

-R¹AR²ⁿX⁴ ₍₁₋ₙ₎= (Vb)

wherein n is an integer 0 or 1 and X⁴, R¹ and R² have the same meaning as above.

The invention can be applied to the preparation of surfaces for different uses. Generally, the functionalized surfaces can be used in reactions where reactant species fed in gas or liquid phase are at least temporarily bound due to the interaction between said species and said functional group. These different alternatives are examined in more detail below. One important application comprises modified supports for catalysts. When modified supports of procatalysts of transition metal catalysts are prepared, the group R¹ of the compound according to formula V preferably stands for a hydrocarbon group which is capable of forming a covalent bond with a transition metal. It can also bind a transition metal compound by complexing. R¹ is capable of binding to at least one of the following metals or a compound thereof: Sc, Ti, V, Cr, Mn, Fe, Co, Y, Zr, Nb, Mo, Tc, Ru, Rh, Hf, Ta, W, Re, Os, or Ir. Particularly preferred metals are the metals belonging to groups IVA, VA and VIA of the periodic table, in particular chromium, hafnium, titanium and zirkonium.

The transition metal or its compound can be bound to the modified support either from gas phase or from liquid phase in a manner known per se.

For the preparation of modified supports as well as for the preparation of other functional surfaces R¹ can be a group -(CH₂)ₖ where k is an integer in the range 1 - 6, X² being an unsubstituted or substituted cyclopentadienyl group or a cyclopentadienyl-type group, such as an unsubstituted or substituted indene group, tetrahydroindene group or fluorene group which the transition metal can be bonded to. A cyclopentadienyl (Cp) ligand group is a proper selection, because it can form a suitably strong covalent bond in terms of catalytic activity with a great number of transition metals including Fe, Co, Cr, Ti, Zr, Ru, Hf and Rh. Furthermore, cyclopentadienyl is capable of binding, e.g., carboxylic anhydride groups, which make surface structures suitable for absorption purposes, among other applications.

R² is a linear or branched C₁₋₁₀ alkyl group, particularly a lower alkyl group such as a methyl, ethyl, n-propyl and isopropyl, n-butyl, isobutyl and tert-butyl or any pentyl or hexyl group.

R⁴ is a methylene chain containing advantageously 2 - 4 carbons (such as an ethylene, propylene or butylene chain).

X is selected from the group consisting of alkyl (-R⁵), alkoxy (-OR⁵), carboxylic acid (-OOCR⁵), amine (-NR⁵ ₂) and chlorine (-Cl), wherein R⁵ represents an alifatic hydrocarbon chain having 1 to 10 carbon atoms. X is advantageously an alkoxy (-OR⁵), carboxylic acid (-OOCR⁵), amine (-NR⁵ ₂) or chlorine (-Cl), wherein R⁵ represents an alifatic hydrocarbon chain having 1 to 10 carbon atoms. X is preferably methoxy or ethoxy. When the above-mentioned silane compound reacts with an inorganic oxide, the bond between the silicon atom and the group X⁴ is replaced by a bond between an inorganic compound and the silicon atom. Methoxy and ethoxy are particularly preferred of the X⁴ groups and they form ethanol or methanol when they react with water or with the hydroxyl groups of the inorganic surface. Because chlorosilanes form hydrochloric acid as a side-product they are less preferred.

The silane compound mentioned in the examples below, (EtO)₃Si(CH₂)₃Cp, is a good bridging compound between a transition metal or a functional group which are to be bound to a support and, e.g., a porous support having a large surface, such as silica and aluminium oxide. The methylene chain between the silicon atom and the cyclopentadienyl group also potentially softens the heterogeneous character of the inorganic oxides.

The process according to the present invention is advantageously carried out under surface-bond-selective reaction conditions. In the context of the present invention, this term means that the reactant is attached in vapour phase to the surface of a solid material (inorganic oxide) under conditions in which the properties of the surface determine the amount of reactant bound to the surface. The preparation of catalysts under surface-bond-selective conditions is described, e.g., in FI Pat. Nos. 84562 and 87892.

In the present method, the suitable reagent is bound in vapour phase to the support. The reagent is evaporated separately from the support and the vapourized reagent is taken to a reaction chamber, wherein it is reacted with an inorganic oxide compound acting as the support. During the reaction, the support is maintained at a temperature which is above the vapour condensation temperature, and simultaneously, so high that the minimum thermal activation energy necessary for the formation of chemical bonds between the heterogenizing compound and the surface bond sites of the support, is attained (thus accomplishing the chemisorption of the heterogenizing compound). Through this technique, a support suitable for bonding the transition metal is achieved.

By the present process the linking agent, e.g. a silane compound, can be attached directly by a gas phase reaction to a support without any difficult hydrolyzation step for alkoxysilanes and/or use of organic solvents. In the present surface bond selective method, after the reaction the compound is ready for binding a transition metal or for other reactions.

As mentioned above, the solution according to the invention can be used for heterogenization of catalysts. The invention is particularly well suited for the preparation of olefin catalysts. Within the context of the present invention the term "heterogenization" is used to refer to the isolation and stabilization of catalytically active metal compounds which are usually unstable in the homogeneous phase, by bonding a spacer compound (heterogen ization compound) which is compatible with the precursor of the catalyst to the surface of an inorganic oxide (e.g., SiO₂, Al₂O₃, TiO₂, ZrO₂).

However, the cyclopentadienyl surface according to the invention can also be used for cycloaddition reactions of the Diels-Alder type, whereby a carboxylic anhydride surface may be formed from the cyclopentadienyl surface by reacting a maleic acid anhydride with the surface at a low temperature. The next step may comprise reacting the anhydride surface with water, thus allowing for the formation of a dicarboxylic acid surface capable of binding metal atoms from water or other polar and/or organic solvents.

The solution according to the invention may be used to prepare even other functional surfaces. Thus, alcoholi (-OH)- or ether (-OCH₃ tai -OCH₂CH₃) surfaces can be prepared on a silicon oxide surface by using organic dialcohols, or correspondingly, alcohol ethers, preferably at a high reaction temperature (> 200 °C).

The reagents have the general formula VI

HO-R⁶OR⁷ (VI)

wherein
- R⁶: represents a -(CH₂)ₖ group where k is an integer 1 to 4, and
- R⁷: is a hydrogen atom or an alkyl group (-R⁵), where R⁵ has the same meaning as above.

The present invention is well suited for the preparation of an alcohol surface because, e.g., the number of alcoholic OH groups is greater than 1,5 OH groups/nm² in the case of porous silicon oxide having a great surface area when ethylene glycol HOCH₂CH₂OH is used as the reacting alcohol. It has unexpectedly been found that when the above reaction is carried out at surface bond selective conditions at +300 °C, all groups except the internal Si-OH groups will disappear from the silicon oxide surface which has been heat treated at 600 °C for 16 hours prior to the reaction. When a primary alcohol such as ethanol is used instead of ethylene glycol, separate Si-OH groups are visible in the FT-IR spectrum, as in the case of the original heat treated silicon oxide. Similarly, a carbon analysis shows that the ethanol treated silicon oxide contains less carbon atoms by half per nm² when compared to ethylene glycol.

Correspondingly, an ether surface may be produced by using, e.g., 2-methoxy ethanol (CH₃OCH₂CH₂OH) or 2-ethoxy ethanol (CH₃CH₂OCH₂CH₂OH) instead of ethylene glycol.. Organic phenyl surfaces may be produced by using phenyl triethoxy silane, whereby R⁴ in Formula I represents a phenylene group and the surface bonding sites are provided by the cyclic carbon atoms of the phenylene ring. At wish, functional groups may be bonded to the phenyl surfaces, such as an alcohol (R-OH), ether (R-O-R), halide (R-X), aldehyde (RCHO), ketone (R₂CO), carboxylic acid (R-CO₂H), carboxylic acid anhydride (R-CO₂)₂O, dicarboxylic acid (HOOC-R-COOH), ester (R-COO₂R), amide (R-CONH₂), aminine (R-NH₂), nitro compund (R-NO₂), nitrile (RC=N) or thiole (R-SH). R stands for a hydrocarbon group. The functional groups cited may also be bonded to the phenyl reagent.

The term "surface-bond site" refers to a functional group on the support surface capable of reacting with the transition metal or a compound thereof. The present invention makes particular use of the reaction of such a functional group with a group having the formula -AR² ₘX₍₃₋ₘ₎. Generally, the surface-bond site is formed by a hydroxyl group or a metal-oxygen-metal bridge, whereby the reaction between the above-mentioned groups provides on the support surface a molecular structure represented by the formula -A(R² ₘ)X(₂₋ ₘ)-O-metal atom.

The invention offers significant benefits. Thus, it has been found that in the polymerization of ethene using a catalyst in which a transition metal compound is bonded to a support surface carrying a diene-ring structure which is prepared according to the invention, together with a methylaluminium oxane (MAO) cocatalyst, the polyethene product thus obtained has a sufficiently high molecular weight (M_{w} > 100.000) for commercial applications and also has a narrow molecular weight distribution (M_{w}/Mₙ < 3). Such a narrow molecular weight distribution cannot be attained by means of conventional heterogeneous Ziegler-Natta catalysts such as CrO₃/SiO₂ or TiCl₄/MgCl₂ catalysts without a markedly reduced catalyst activity.

The functional surfaces according to the invention may, among other things, be used to further produce a transition metal surface bound to the functional surface, such as zirconium metal bound to cyclopentadiene without any interaction of the hydroxyl groups of the original surface with the bound metal, because essentially all surface hydroxyl groups of the inorganic oxide are reacted during the reaction between an inorganic oxide and a bridging agent under surface-bond selective conditions.

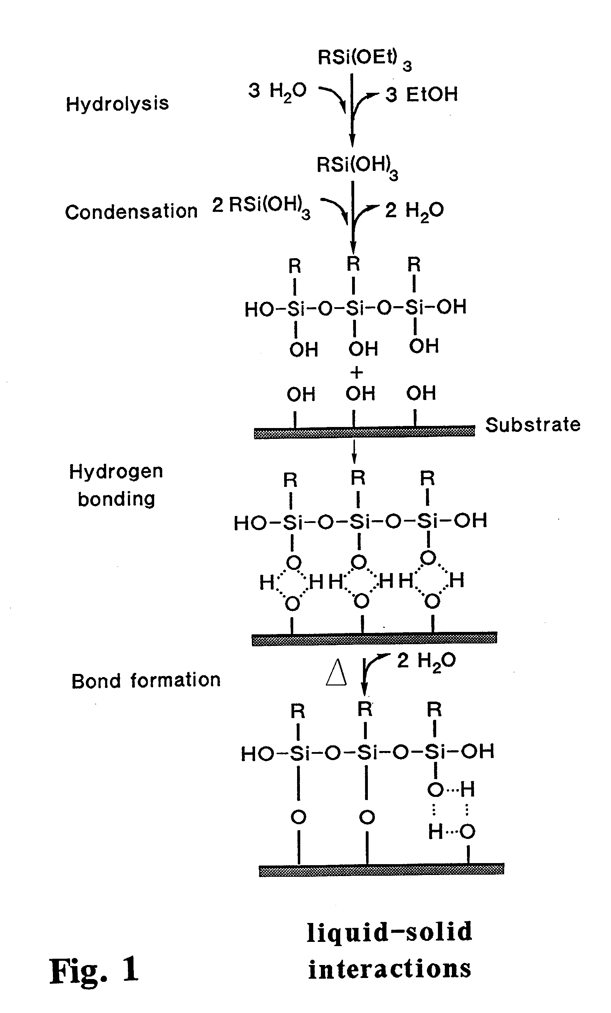

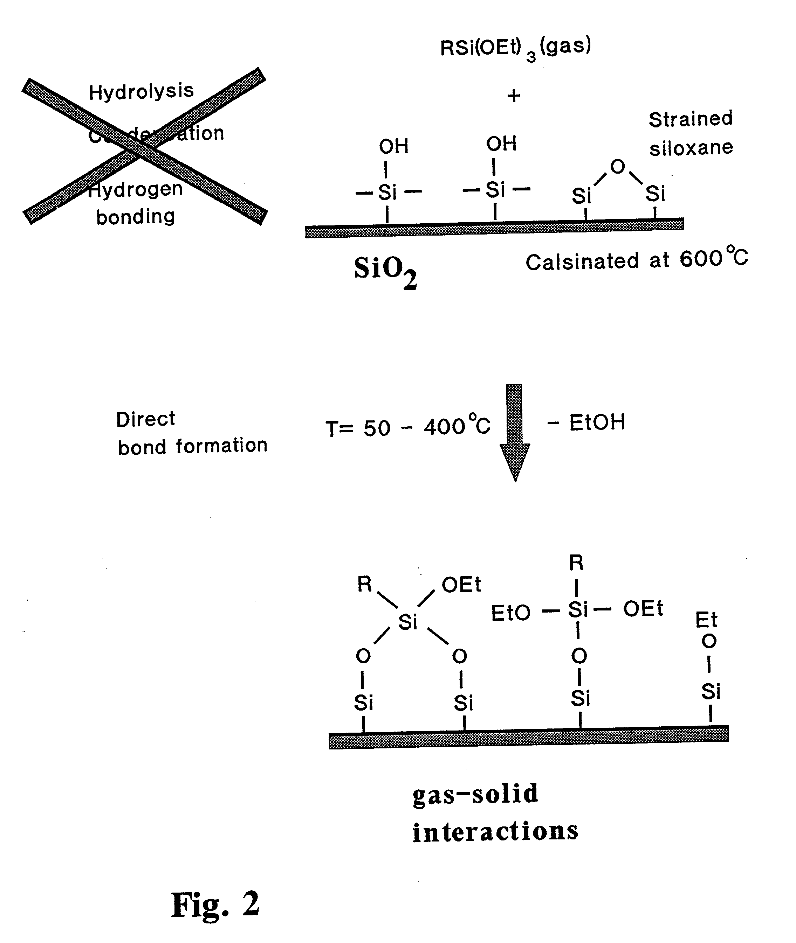

This is illustrated by the examples according to the invention. Inorganic hydroxyls are present in a large amount when the same reaction is carried out in dissolved phase by hydrolyzing a silane alkoxy compound by a conventional method [ref. G. L. Witucki, J. Coat. Technol. 65 (1993) 57]. Moreover, the functionalization may be carried out in one step according to the present invention, and after the reaction, the product may be used directly or processed further without arduous washing and drying steps. The process-related advantage provided by the invention and its effect on the product are illustrated in Figs. 1 and 2.

Furthermore, functional surfaces may be employed for simple production of organic surfaces suited for chromatographic applications in one or several process steps, whereas conventional solution techniques require arduous and time-consuming solvent washing and drying steps and separation operations between the different process steps as well as in many cases methods carried out under pressure, if a similar result is aimed at as is obtained by means of the process of the invention. At the same time, the product has a minimal amount of surface hydroxyl groups of an inorganic acid with a detrimental effect on chromatographic separation, whereby these groups require blocking by means of a separate reaction when a conventional solution technique is used. Chromatographic applications in gas or liquid phase are feasible.

In the following, the invention is examined in greater detail by using modified supports suited for the preparation of procatalysts as examples. Other functional surfaces may be provided in an analogous manner. The invention is illustrated by the annexed drawings wherein
Figure 1 is a schematic diagram of the bonding process of alkoxy silane to a substrate in liquid phase,
Figure 2 is a schematic diagram of the bonding process of alkoxy silane to a substrate under surface-bond-selective conditions,
Figure 3 shows an FT-IR spectrum 1 relating to the reaction of silicon oxide at +250 °C with Cp(CH₂)₃Si(OEt)₃,

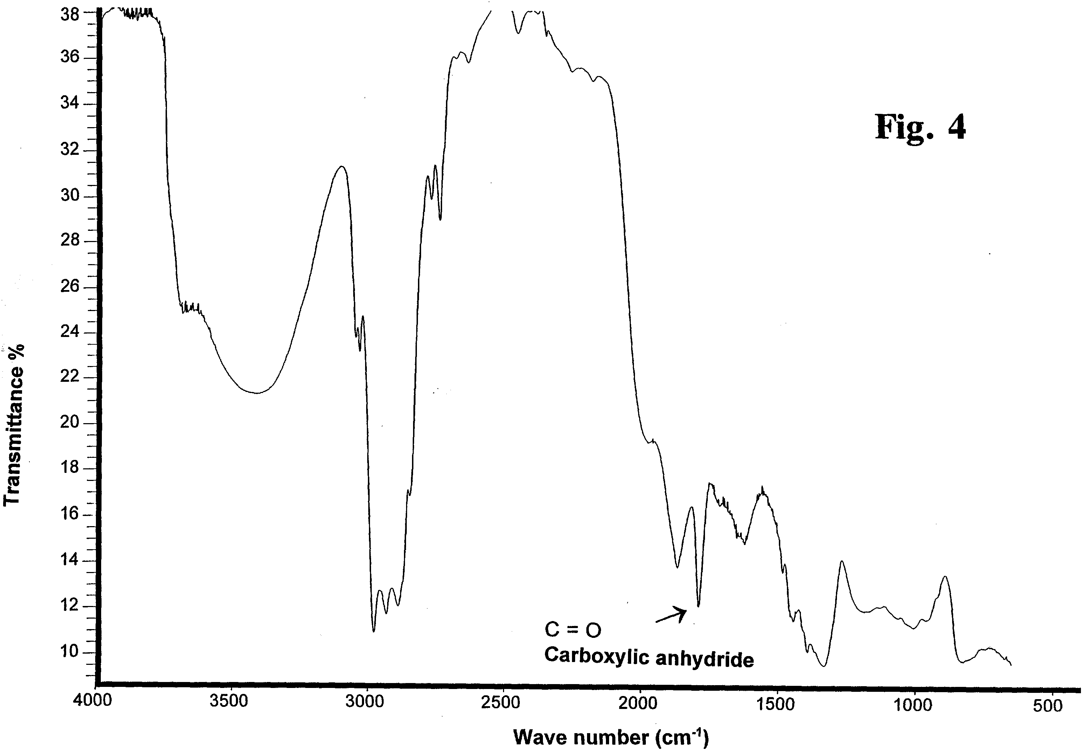

Figure 4 shows an FT-IR spectrum 2, relating to the reaction of a cyclopentadienyl surface with a maleic acid anhydride at +105 °C,
Figure 5 shows an FT-IR spectrum 3, relating to the reaction of ethanol with a silicon oxide at +300 °C, separate Si-OH groups not leaving the silicon oxide surface,
Figure 6 shows an FT-IR spectrum 4, relating to the reaction of ethylene glycol with silicon oxide at +300 °C:ssa, the Si-OH groups leaving the silicon oxide surface,
Figure 7 shows an FT-IR spectrum 5, presenting the IR spectrum of a silicon oxide surface heat treated at 600 °C for 16 hours,
Figure 8 shows an FT-IR spectrum 6, relating to the reaction of 2,2-dimethyl propane diol with silicon oxide, the Si-OH groups leaving the silicon oxide surface and the OH peak of the isolated organic alcohol emerging, and
Figure 9 shows an FT-IR spectrum 7, relating to the reaction of 2-ethyl-, 2-butyl propane diol at 350 °C with a silicon oxide surface, the Si-OH groups leaving the silicon oxide surface and the OH peak of the isolated organic alcohol emerging.

In the appended drawings, refer here to Figs. 1 and 2, are shown the diagrammatic steps of methods for catalyst preparation in liquid phase and gas phase, respectively. The diagram of Fig. 1 is based on the preparation technique described by Witucki [G.L. Witucki, J. Coat. Technol. 65 (1993) 57], while the method according to the invention is illustrated in Fig. 2. As is evident from the diagrams, the technique disclosed by Witucki requires three different reactions for bonding the alkoxy silanes to the support surface. By contrast, the present invention makes it possible to perform the bonding of the cyclopentadienyl silane compound or an equivalent heterogenizing compound to an inorganic material surface in a single step by reacting said compound with the hydroxyl groups and siloxane bridges of the surface in gas phase as is described later in conjunction with the example using silica as the support. The thus synthesized surface structure can be utilized directly for attaching said transition metal compounds by a covalent bond to the support surface. No solvents or drying steps are required in the preparation of the cyclopentadienyl surface structure.

According to a preferred embodiment of the invention, the preparation of the catalyst comprises the following steps:
1) Pretreatment of the oxide support, 2) evaporation of the surface treatment reagent(s) and attachment thereof to the support surface in order to prepare a modified support, 3) attachment of transition metal to the surface of the modified support, and 4) optional treatment of the catalyst with organic aluminium compounds. Steps 1 - 3 are also illustrated in Fig. 2, wherein the attachment of an ethoxysilane compound to a silica support is elucidated.

Purging with an inert gas can be performed between steps 2 and 3 as well as between steps 3 and 4 when desired.

According to the present invention, all reagents for steps 1 and 2 are taken into the reaction chamber in vapour phase, typically one component at a time.

In the first step of the method, the support can be subjected to a pretreatment at elevated temperatures prior to the actual bonding reaction. The support is most advantageously silicon dioxide, aluminium oxide, silicon dioxide-aluminium oxide, magnesium oxide, magnesium silicate, titanium oxide or zirconium oxide. Such a heat treatment can be used to modify the number and nature of OH groups, and thereby, the amount of metal compounds bonded to the support surface. The maximum temperature applicable during the pretreatment of silicon dioxide supports is about 900 °C, while aluminium oxide is advantageously pretreated at a maximum temperature of 800 to 900 °C. In Fig. 2, the typical pretreatment temperature of silica is cited as 600 °C.

The number of OH groups is reduced by subjecting the support to an elevated pretreatment temperature. The duration of the heat pretreatment is 1 to 40 hours, preferably 2 to 24 hours.

Instead of heat treatment, or in addition thereto, the support can also be pretreated by contacting the support with suitable compounds capable of modifying the support surface in an advantageous manner. Thus, a silicon dioxide support can be treated with an aluminium compound. By reacting aluminium chloride and water vapour with silicon dioxide, an Al₂O₃ layer can be formed, as described in FI Pat. No. 84562.

As is evident from the diagram, after the pretreatment the support surface has two types of groups capable of acting as surface-bond sites, namely, hydroxyl groups and siloxane bridges.

In the next step of the method, the evaporated heterogenizing or surface treatment reagent is chemisorbed onto the support surface by contacting the reagent vapours with the surface. By virtue of the direct gas-solid substance reaction, no solvents or washing of the product are needed in the process. The vapour pressure of the evaporated compound is maintained sufficiently high and the time of interaction sufficiently long during the process so that all the surface-bond sites on the support material will be saturated, or alteratively supersaturated, with the catalytically active component or a precursor thereof. The excess amount of the active component used in the process as compared to the minimum concentration required for complete saturation of all available surface-bond sites on the support surface is typically 1 to 100-fold, preferably 1 to 3-fold. The amount of the heterogenizing compound required for forming a monolayer can be computed with the help of the BET method from the surface area and known molecular structure of the support.

According to a preferred embodiment, the reaction temperature may not fall below the minimum temperature required for the evaporation of the reagent; otherwise condensation of the reagent will occur. Besides, the reagent may not undergo condensation at any point along its path into the reaction space. For these reasons, the reagent temperature must not drop below the reaction temperature. The heterogenizing compound and the operating temperature shall be selected such that decomposition of the metal compound and possible condensation of its decomposition products is avoided.

As is evident from Fig. 2, the second step of the method is carried out with an ethoxysilane compound preferably at about 50 - 400 °C, and in fact, this temperature range is suitable for most alkoxysilane compounds. The lower limit of cited temperature range is determined by the condensation temperature of the alkoxysilane to be evaporated at the pressure used and the activation energy required for the formation of a desired surface bond. The upper limit is determined by the temperature at which the heterogenizing compound starts to decompose, or alternatively, the other functional group of the compound, which is intended to remain free, begins to react with the support surface.

The reaction of the catalytically active material or compounds thereof and the support is carried out either at ambient pressure, or preferably at an elevated pressure. However, the reaction is most advantageously carried out in a partial vacuum. The working pressure of the method is typically 0.01 - 10 MPa, advantageously about 0.01 - 10 MPa. Possible pre- and posttreatment steps are most advantageously performed in a partial vacuum. The gain offered by the partial vacuum lies therein that the reaction space stays cleaner and the diffusion speed is enhanced. The reaction time is not particularly critical with the provision that it is extended so long as to permit the evaporated reagent to interact with the surface-bond sites of the support. Hence, the reaction time can be varied, e.g., in the range 0.5 - 25 h, while a reaction time of 1 - 10 h is typically used for the treatment of a 5 - 20 g batch of support material.

The evaporated heterogenizing compound can be introduced into the reaction space as such, or alternatively, with the help of an inert carrier gas such as nitrogen or a noble gas. Most advantageously, an inert-gas atmosphere is used and the same inert gas is employed as the carrier gas of the evaporated transition metal species.

After the vapour-phase reaction, all unreacted surface-treatment reagent is removed from the reaction space as well as the side-products of the reaction between the reagent and the support (e.g., those formed between HCl and the organic residues of the reagent). Accordingly, nitrogen-gas purging is performed at reaction temperature subsequent to the chemisorption reaction in order to remove the unreacted reagent and the released HCl.

Next, to the modified support surface, or more accurately, to the functional group of the heterogenizing reagent is attached a transition metal compound. The transition metal is attached to the support by introducing a transition metal compound of the formula MHal₄ or LMHal₃, where M is a transition metal such as Ti, Zr or Hf, Hal is a halogen and L is a group containing a diene-ring structure, to react with an inorganic oxide support modified by a compound having the composition of formula I. In a transition metal compound with the LMHal₃ composition, L is most advantageously a cyclopentadienyl group, or alternatively, a penta-, tetra-, tri-, di- or mono-alkyl, monoaryl or monosilyl derivative thereof.

According to an advantageous embodiment, the transition metal compound is a tetramethyl cyclopentadienyl, n-butyl cyclopentadienyl or t-butyl cyclopentadienyl compound of the transition metal.

The transition metal compound can be attached to the support under surface-bond-selective conditions, whereby the process conditions are adjusted as described above. The attachment of the transition metal compound to the support surface under surface-bond-selective conditions is described, e.g., in FI Pat. Nos. 84608, 84609, 95276 and in FI Pat. Appl. No. 933998.

Alternatively, the transition metal compound can be attached using a conventional impregnation technique. Here, the modified support is slurried into a suitable solvent, into which the transition metal compound is added. The product is separated by filtration, followed by washing.

After the catalytically active compounds of the transition metal have been attached to the support, the catalyst can be modified: it can be preactivated by adding conventional organometal compounds.

The novel catalyst prepared by the method described herein is capable of catalyzing the homo- and copolymerization of ethylene. According to an embodiment, these catalysts can catalyze the polymerization of ethylene in gas phase at an excess pressure of at least 2000 kPa resulting in a polyethylene grade with a narrow molecular weight distribution, whereby the polydispersity index is maximally 5, advantageously smaller than 3.

The following working examples illustrate the invention:

### Example 1

### Preparation of a cyclopentadiene surface under surface bond selective conditions

In the following, the preparation of a zirconocene procatalyst and the use of such a procatalyst in ethylene polymerization will be described. The preparation of the procatalyst comprises two steps: The first step is formed by a treatment of a silicon dioxide support with a cyclopentadienyl compound under surface-bond-selective conditions in order to achieve a modified support surface. Subsequently, the second step comprises attaching zirconium to the support surface from said cyclopentadienyl compound. The cocatalyst used in this product is methylaluminium oxane.

### Preparation of support

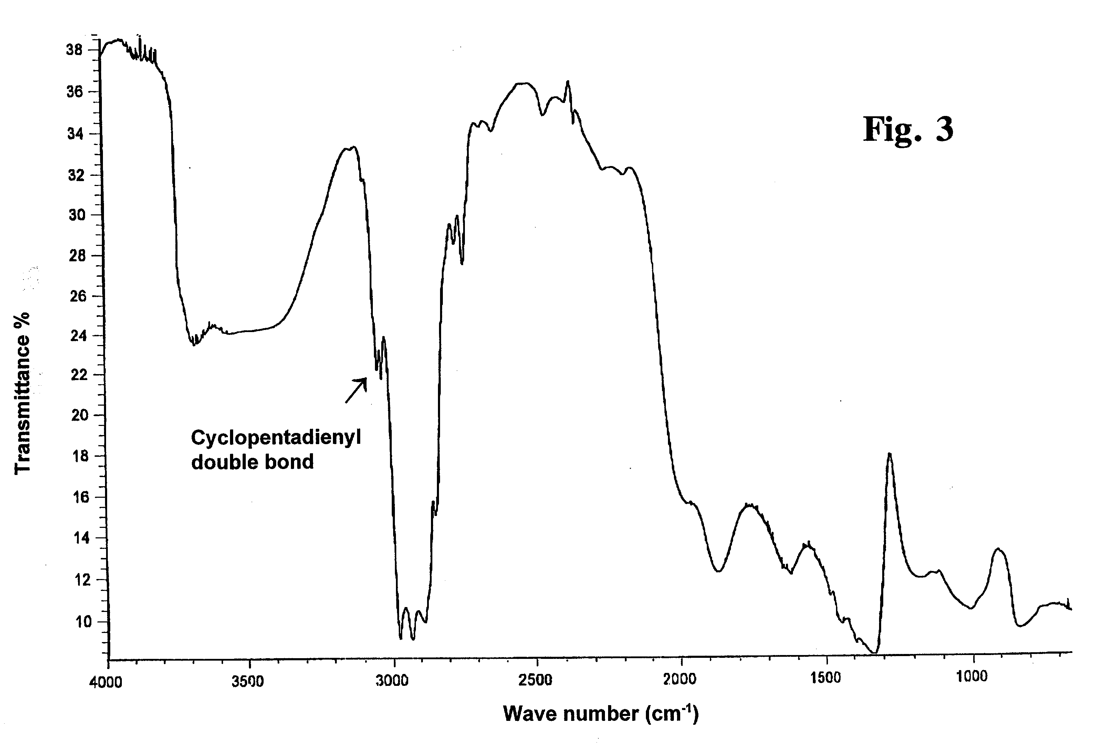

An 8.4 g batch of a commercially available SiO₂ with a large surface area (320 m²/g) (product name EP 10, manufacturer Crossfield Ltd.), which had previously been heat-treated at 200 °C for 16 h, was transferred into the reaction chamber. The reactor was evacuated and the support batch was preheated at +200 °C for 3 h. Next, a 6 ml aliquot of Cp(CH₂)₃Si(OEt)₃, evaporated at +100 °C, was introduced into the reaction chamber using nitrogen as the carrier gas, the reaction chamber having been brought to a +200 °C operating temperature. The pressure was 0.028 MPa and the reaction was continued for 2 h, after which time the thus treated support was purged with a pure nitrogen gas flow for 1 h. The product thus obtained contained 6.9 wt.-% carbon. The IR spectrum of the product is shown in Figure 3.

### Preparation of procatalyst

The obtained modified silica (2.5 g aliquot) was suspended in 50 ml of THF solution. The suspension was vigorously agitated overnight at room temperature. Then, the solid matter was separated and washed three times with THF. The obtained solid substance was suspended in 50 ml THF, and 0.35 g (1.3 mmol) cyclopentadienyl zirconium trichloride, CpZrCl₃, dissolved in THF was added dropwise into the suspension in a nitrogen atmosphere. The suspension was vigorously agitated overnight at room temperature, after which the solid substance was separated and washed twice with 30 ml THF and once with 30 ml diethyl ether and dried in a vacuum. Finally the product was dried in a vacuum at +45 °C overnight. The product had a canary yellow colour. Results from analyses of the vacuum-dried procatalyst were as follows: Zr 3.0 wt.-% and Cl 1.1 wt.-%.

### Preparation of reference catalyst

The reference catalyst was a homogenous CpZrCl₃ toluene solution, prepared by dissolving 45 mg CpZrCl₃ in 120 ml desiccated toluene at room temperature. This solution was then used as the catalyst in the reference polymerization test.

### Ethene polymerization

Ethene homopolymerization was carried out in a reactor of 11 volume. The heptane medium (about 450 g) was first released into the vacuumed reactor, after which the MAO (methylaluminium oxane) cocatalyst was introduced into the reactor. Next into the reactor was released a 12.8 mg batch of a procatalyst dispersed in toluene, said amount corresponding to 4.21 x 10⁻⁶ mol Zr. The actual polymerization was begun by releasing ethene into the reactor. As the ethene was consumed, more ethene was continually added into the reactor during the entire polymerization process.

The polymerization conditions were as follows: temperature 80 °C, pressure 2.5 bar, polymerization time 0.5 h, Al(MAO)/Zr molar ratio 2000. Polymerization was terminated by closing the ethene infeed valve. The polymerization product was filtered, dried and weighed. The activity of the catalyst was 797 g/g cat/h, corresponding to 2422 g PE/mol Zr/h.

Determination of the polyethene product molecular weight by the GPC method gave the following results: Mₙ = 48,000 g/mol, M_{w} = 119,000 g/mol, and the molecular weight distribution expressed as M_{w}/Mₙ was 2.48.

The narrow molecular weight distribution of the product made using the catalyst according to the invention is a explicit indication of the high surface homogeneity of the catalyst according to the invention.

The reference catalyst was also used for polymerization which was carried out as described above but by using 4.19 x 10⁻⁶ mol Zr. 5.1 g of polymerization product was obtained, which corresponds to an activity of 1193 kg polymer/mol Zr/h. Determination of the polyethylene product molecular weight by the GPC method gave the following results: Mₙ = 85,000 g/mol, M_{w} = 233,000 g/mol, and the molecular weight distribution expressed as M_{w}/Mₙ was 2.73.

Example 1 shows that the surface-bond selective conditions and the thus prepared cyclopentadiene surface have a great impact on the activity of the prepared catalyst because the catalyst according to the invention has a two-fold activity compared to homogeneous catalyst systems.

### Example 2

### Preparation of functional surfaces:

The preparations 2 - 11 were carried out as in Example 1 but by applying reaction and evaporation temperatures suited for each compound. Sample 1 was prepared in the same manner as the modified support of Example 1. A commercial SiO₂ grade (product name EP 10, manufacturer Crossfield Ltd.) having a large surface area (320 m²/g) was used for all preparations, the SiO₂ having been heat treated at 600 °C for 16 hours.

The supports used for the preparation of functional surfaces and their pretreatment in the reactor, compounds used for surface modification, heat carrier amounts, evaporation and reaction temperatures as well as nitrogen purging temperatures and durations employed after the reaction are shown in Table 1. All reactions and treatments were carried out in an inert nitrogen atmosphere.

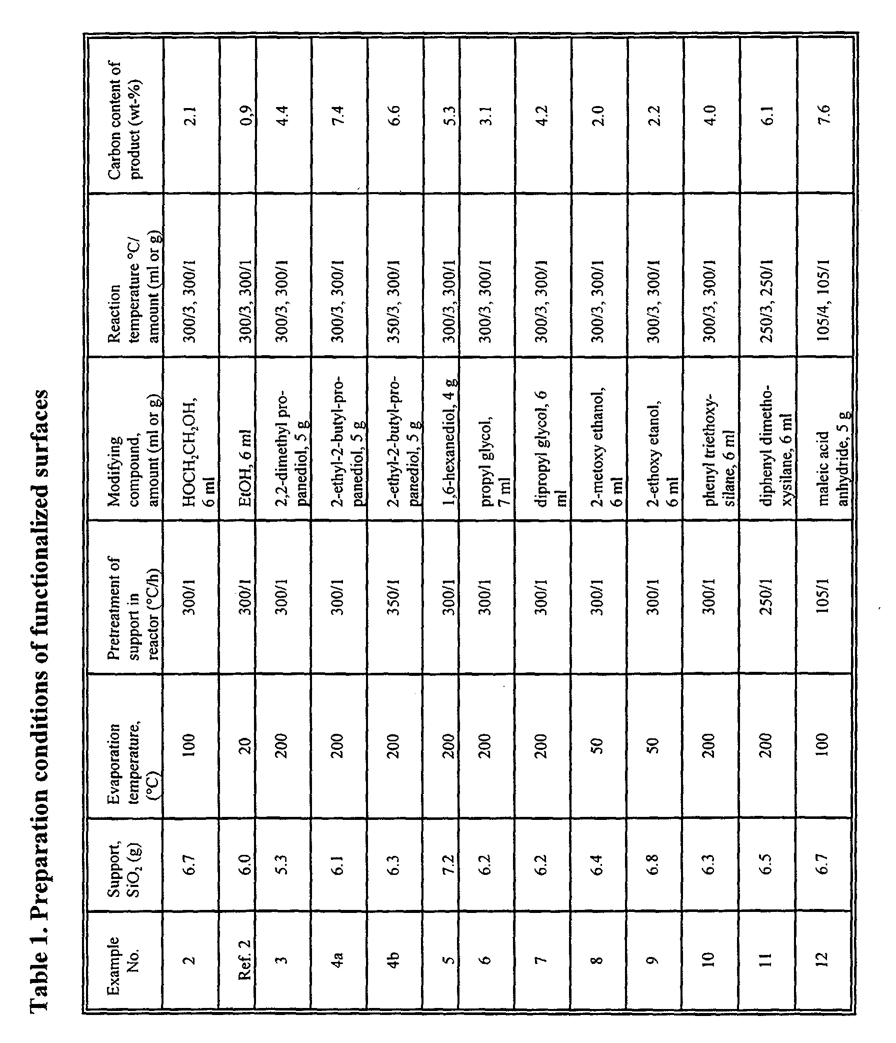

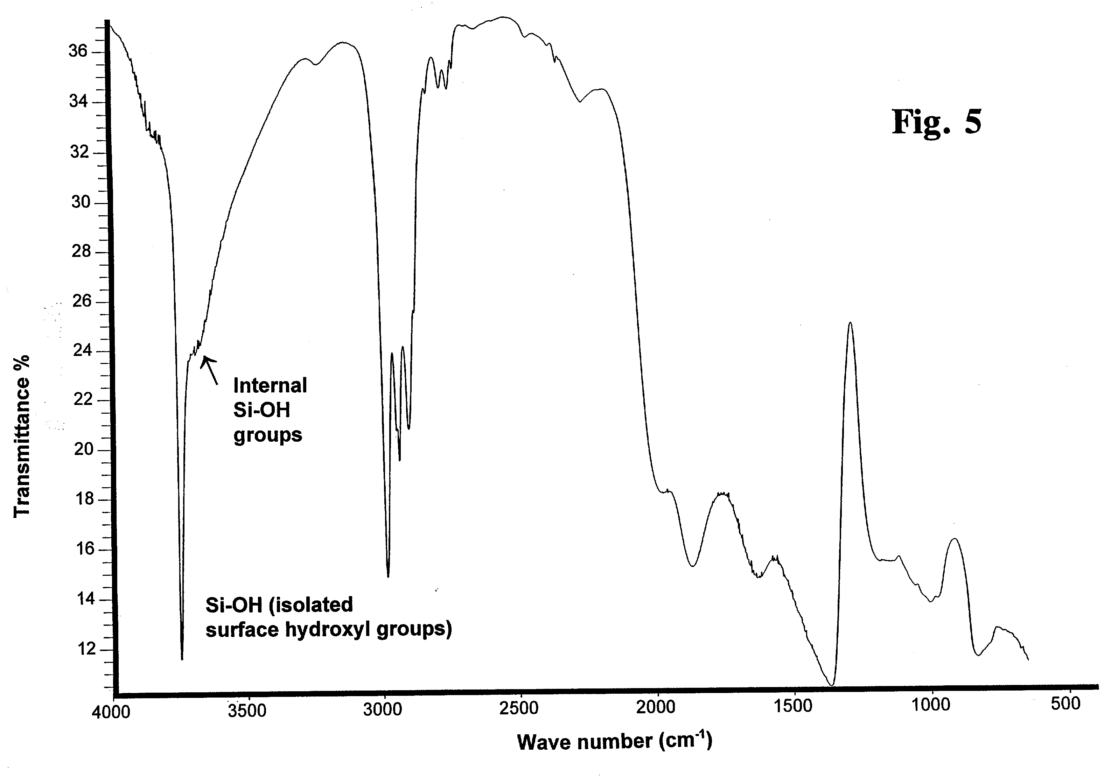

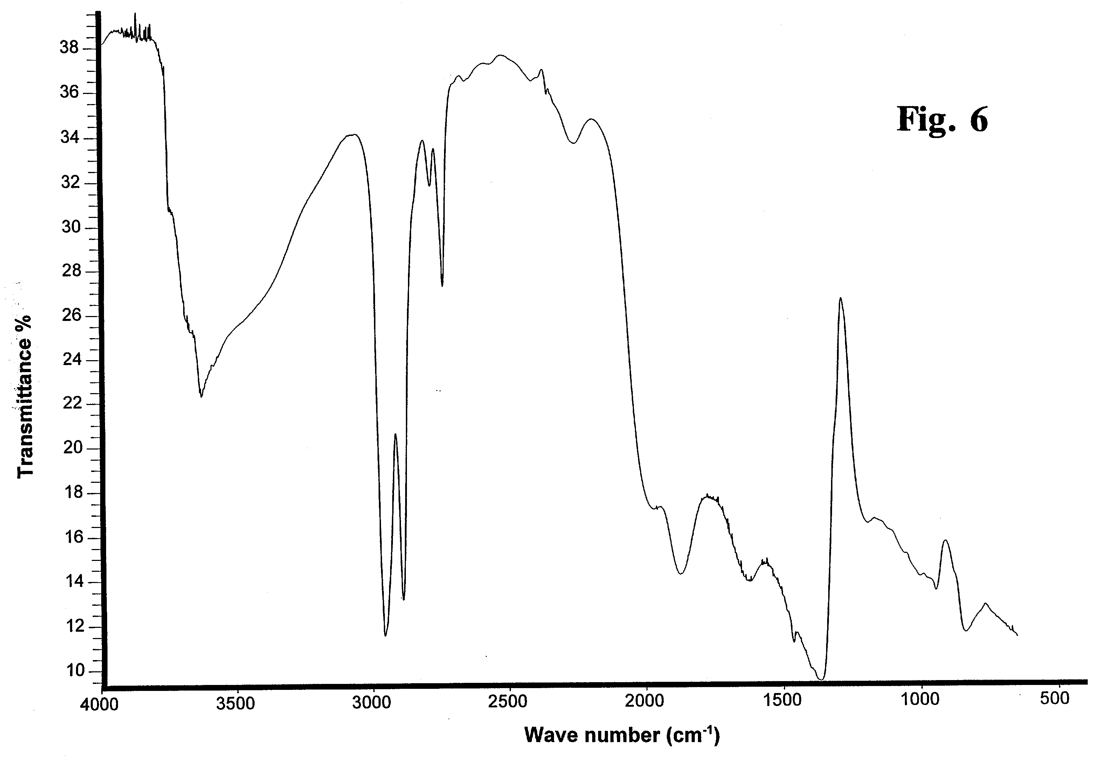

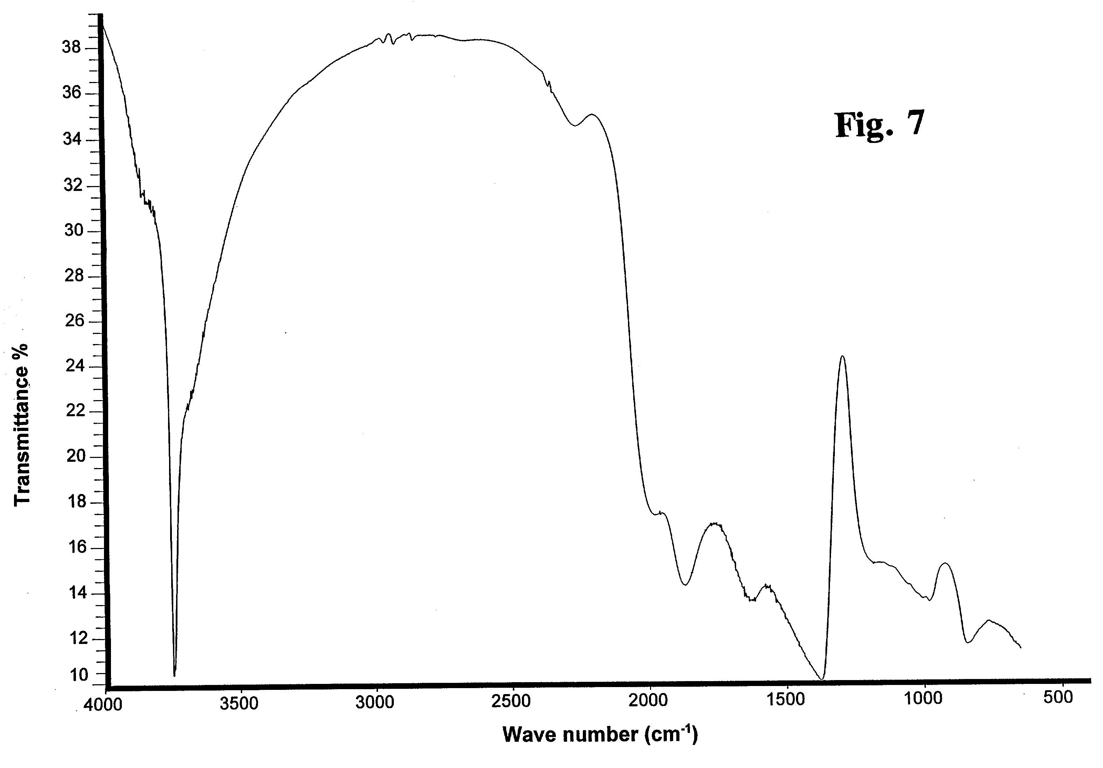

Based on the carbon analyses of Example 2 and reference example 2 and by comparing spectra 3, 4 and 5 (Figures 5 to 7) it can be noticed that ethanol does not remove all isolated Si-OH hydroxyl groups from the silica surface, as will ethylene glycol, at the same reaction temperature. By means of the process according to the invention it is, thus, possible simply to convert Si-OH entirely to a surface of the type -CH₂-OH.

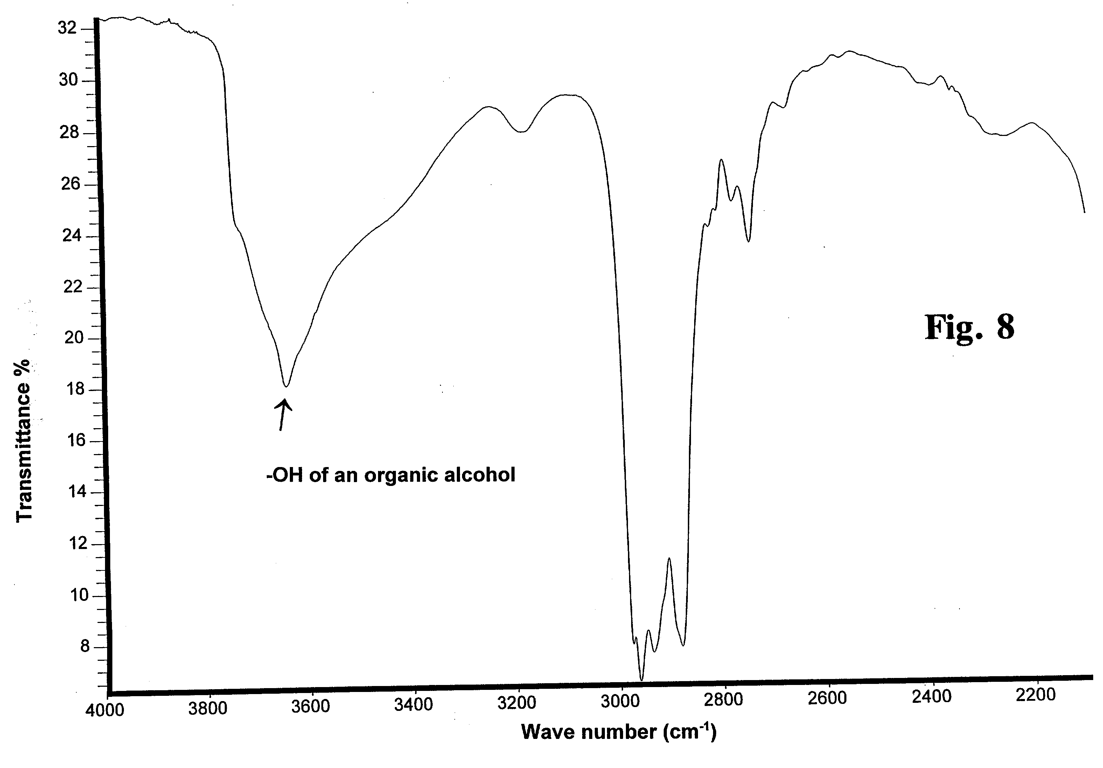

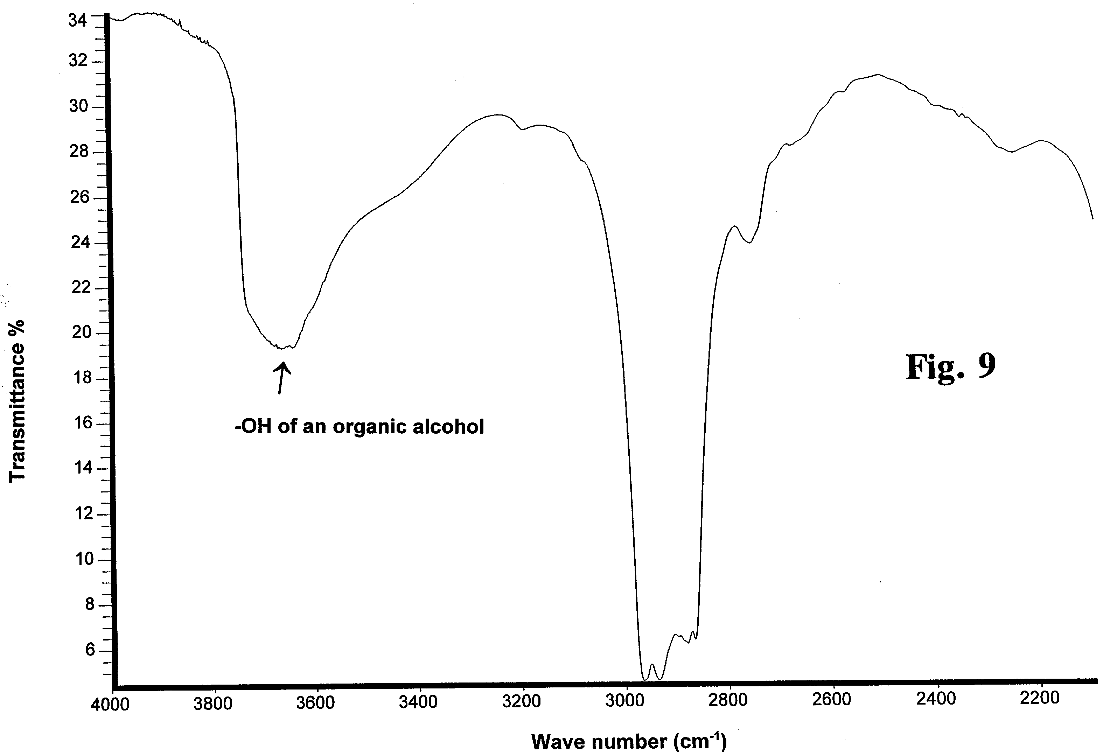

This appears from the IR analysis of the surface treated with ethylene glycol (Spectrum 3; Figure 5), which shows that in the infrared spectrum in the range 3700 to 3600 cm-¹ there is only one hydroxy group peak of an organic alcohol at said wave numbers and the isolated Si-OH peak at wave number 3747 cm-¹ has completely disappeared as a result of the chemical reaction between the gas and the surface. In other words, by means of the process according to the invention it is possible to convert an inorganic surface to an organic surface in one reaction step without any of the wahings steps and aftertreatment steps necessary in other methods. The same phenomenon can also be seen in Examples 3 as well as 4a and 4b, wherein silica has been treated in gas phase at high temperatures with hydrocarbon-substituted 1,3-propane diols. From the spectra 6 and 7 (Figs. 8 and 9), only the hydroxyl group of an isolated organic alcohol at wave number 3641 cm-¹ in the case of 2,2-dimethyl-1,3-propane diol and at wave number 3665 cm⁻¹ in the case of 2-ethyl-,2-butyl-propane diol. In particular, the use of propane diols substituted with branched hydrocarbons in the preparation of organic chromatographic surfaces is of advantage in the process of the invention.

Surface-bonded hydrocarbon-substituted propane diols which at the same time are particularly stable as regards the impact of water and which through their organic alcohol group render the formation of hydrogen bonds possible between chromatographically separated molecules provide a new range of application for the method according to the invention as an industrial manufacturing process due to the above advantages, and not just as a possible novel material suited for chromatography.

It is evident that the method according to the invention can be extensively applied in the case of
- diols according to Examples 6 and 7,
- ether alcohols according to Examples 8 and 9 for the preparation of organic ether surfaces,
- phenol-type alcohols wherein the phenyl ring contains a halogen substituent in ortho- or meta-position,
- silicon compounds according to Examples 10 and 11 containing one or more phenyl rings which may even contain a halogen substituent in ortho- or metaposition in regard to the silicon atom. Halogen-free as well as halogen-containing phenyl ring surfaces can be functionalized in accordance with the application, for instance, halogen-free phenyl ring surfaces can be functionalized with organic alkali metal compounds such as butyl or methyl lithium

Example 12 is a further application of the cyclopentadienyl surface of Example 1 (spectrum 1; Fig. 3). By means of the process of the invention, the obtained cyclopentadienyl surface can be transformed further to a part of or an entire carboxylic anhydride surface by the Diels-Alder reaction, as will emerge from the IR spectrum 2. In spectrum 2, the carbonyl peak of the carboxylic anhydride is visible at wave number 1789 cm⁻¹, proving that different compounds subjected to the Diels-Alder reaction with monosubstituted cyclopentadiene are of particular advantage in the further development of the surface toward practical applications.

It will be obvious for one versed in the art that the carboxylic anhydride surface can fairly easily be transformed into a dicarboxylic anhydride surface by treating the anhydride surface either with an aqueous solution or with humid gas. Of the practical applications of a dicarboxylic acid surface, the special capability of forming chelates with metal ions may be mentioned, whereby this capability may render possible the extraction of different kinds of metal ions from aqueous solutions.

It will emerge from reference example 2 that ethanol does not remove all of the Si-OH hydroxyl groups, as does ethylene glycol at the same reaction temperature (cf. spectra 3, 4 and 5; Figs. 5 to 7).

## Claims

1. A solid-phase surface structure, comprising
- functional groups on the surface of a substrate, said groups forming surface binding sites to which the species of gas or liquid phase reactant is at least temporarily bound due to interaction between said species and said functional group during a chemical reaction,
**characterized** in that
- essentially all functional groups are attached to the substrate via a bridging group attached to surface atoms of the substrate,
said surface binding sites being so far from the surface of said substrate that the surface of said substrate does not have any significant influence on said interaction between said surface binding sites and said reactant species.

2. The surface structure according to claim 1, wherein essentially all hydroxyl groups of an inorganic surface have reacted under surface bond selective conditions.

3. The surface structure according to claim 1 or 2, wherein the bridging group comprises a linear, branched or cyclic hydrocarbon group possibly containing at least one heteroatom.

4. The surface structure according to any one of claims 1 to 3, wherein the bridging group comprises an alkylene or arylene group which possibly contains at least one heteroatom.

5. The surface structure according to claim 2, 3 or 4, wherein the heteroatom is oxygen, nitrogen, sulphur, phosphorus, silicon, tin, or germanium.

6. The surface structure according to any one of the previous claims, wherein the bridging group is bound to the surface atoms of the substrate via silicon, tin, germanium or carbon.

7. The surface structure according to claim 6, wherein the substrate comprises an inorganic oxide, **characterized** in that the surface binding sites are attached to the surface via a group according to formula Va
-R⁴SiR² ₘX⁴ ₍₂₋ₘ₎- (Va)
or formula Vb
-R⁴AR² ₙX⁴ ₍₁₋ₙ₎= (Vb)
wherein
m is an integer 0, 1 or 2,
X⁴ is the residue of a hydrolyzed group which has reacted with the hydroxy groups or metal-oxygen-metal-bridges of the inorganic oxide,
R² is a lower alkyl group or a hydrogen atom, and
R⁴ is a group -(CH₂)ₖ-, wherein k is an integer 1 to 4, or an arylene group.

8. The surface structure according to claim 7, wherein the surface binding sites are cyclopentadienyl groups, whereby in formulas Va or Vb, respectively, R⁴ stands for an alkylene group.

9. The surface structure according to claim 7, wherein the surface binding sites comprise carboxylic anhydride groups or catalytically active metals or compounds thereof attached to the group R⁴ via a cyclopentadienyl group.

10. The surface structure according to claim 7, wherein R⁴ represents a phenylene group and the surface binding sites a formed by the ring carbon atoms of the phenylene ring.

11. A process for preparing a solid-phase surface structure comprising a substrate containing surface binding sites for carrying out chemical reactions during which a gas or liquid phase reactant species is at least temporarily bound to said binding sites of said the substrate due to interaction between said sites and said species,
**characterized** by
- reacting the substrate with a compound of formula (I)
R¹AX¹ (I)
wherein
A is silicon, tin, germanium or carbon,
R¹ is a hydrocarbon group and
X¹ is a functional group, and
- carrying out the reaction between the substrate and the compound according to formula I under surface bond selective conditions.

12. The process according to claim 11, wherein a compound of formula (II) is used
X²R¹AX¹ (II)
wherein
X¹ and X² can be the same or different and they represent a functional group, and
R¹ and A have the same meaning as in claim 11.

13. The process according to claim 11 or 12, wherein X¹ and X² independently stand for a hydroxy, alkoxy, halide, aldehyde, ketone, carboxylic acid, carboxylic anhydride, dicarboxylic acid, ester, amide, amine, nitro, nitrile or thiol group, and X² means a ring group containing a double or triple bond.

14. The process according to claim 11 or 12, wherein the substrate is reacted with a compound of formula (V)
X²R¹AR² ₘX³ ₍₃₋ₘ₎ (V)
wherein
A, R¹ and X² have the same meaning as above,
R² is a hydrogen atom or a lower alkyl group,
X³ is a hydrolyzing group which reacts with the surface atoms of the substrate and
m is an integer 0, 1 or 2.

15. The process according to claim 14, wherein in the compound according to formula V the residue X³ is selected from the group consisting of alkyl (-R⁵), alkoxy (-OR⁵), carboxylic acid (-OOCR⁵), amine (-NR⁵ ₂) or chlorine (-Cl), wherein R⁵ represents an alifatic hydrocarbon chain having 1 to 10 carbon atoms.

16. The process according to claim 14 or 15, wherein group X² in formula V stands for a group which is capable of binding transition metals or compounds thereof and R¹ represents a group -(CH₂)ₖ-, wherein k is an integer from 1 to 4.

17. The process according to claim 16, wherein X² represents a cyclic diene structure, in particular a cyclopentadiene group, an indenyl group or a fluorene group.

18. The process according to claim 12, wherein the substrate is reacted with a compound of formula VI
HO-R⁶OR⁷ (VI)
wherein
R⁶ represents a group -(CH₂)ₖ-, wherein k is an integer from 1 to 4, and
R⁷ is a hydrogen atom or an alkyl group (-R⁵), wherein R⁵ has the same meaning as above.

19. The use of a functional surface prepared according to any one of claims 1 to 10 or a functional surface prepared according to any one of claims 11 to 18 as a support for catalysts or procatalysts or for chromatographic applications.
